Europäisches Patentamt

**European Patent Office**

**Office européen des brevets**

(11) Numéro de publication: **0 034 313**

**A1**

(12) **DEMANDE DE BREVET EUROPEEN**

(21) Numéro de dépôt: **81100855.6**

(22) Date de dépôt: **06.02.81**

(51) Int. Cl.³: **F 16 K 11/16**
**F 16 K 35/14**

(30) Priorité: **13.02.80 FR 8003177**

(43) Date de publication de la demande:
**26.08.81 Bulletin 81'34**

(84) Etats contractants désignés:
**AT BE CH DE FR GB IT LI LU NL SE**

(71) Demandeur: **COMPAGNIE INDUSTRIELLE DES
TELECOMMUNICATIONS CIT-ALCATEL S.A. dite:
12, rue de la Baume
F-75008 Paris(FR)**

(72) Inventeur: **Albertin, Michel
3, rue des Cygnes
F-74000 Annecy-Le-Vieux(FR)**

(72) Inventeur: **Lavorel, Lucien
1, rue Jules Barut
F-74000 Annecy(FR)**

(74) Mandataire: **Weinmiller, Jürgen et al,
Zeppelinstrasse 63
D-8000 München 80(DE)**

(54) **Vanne à trois voies.**

㉗ La vanne qui comporte deux voies secondaires destinées à être fermées simultanément par rapport à une voie principale, puis reliées alternativement à ladite voie principale, est caractérisée en ce qu'elle comporte un organe de manoeuvre unique (6) commandant sur chacune des voies (12, 13) un clapet (2,3) et des moyens (4, 5, 8) pour assurer d'une part la fermeture simultanée du clapet de chacune des voies secondaires et d'autre part l'ouverture alternative du clapet de l'une des voies et le verrouillage en position de fermeture de clapet de l'autre voie.

L'invention s'applique notamment à la commande des installations sous vide élevé.

**FIG.4**

Croydon Printing Company Ltd

Vanne à trois voies

L'invention est relative à une vanne à trois voies, utilisée couramment dans l'industrie d'une part pour interrompre la communication entre une voie principale et deux voies secondaires et d'autre part pour relier alternativement la voie principale à l'une de ces voies secondaires.

Les vannes à trois voies sont généralement constituées d'un corps à trois voies, d'un boisseau et d'un levier de commande unique permettant d'éviter toute fausse manoeuvre.

Cependant, ces vannes ne sont pas sans inconvénients. En effet, la manoeuvre du levier de commande réalise successivement l'ouverture d'une voie et la fermeture simultanée de l'autre voie, en passant par la fermeture simultanée des deux voies. Or au cours de ces manoeuvres, les différentes parties du boisseau défilent alternativement devant chacune de ces voies, de telle sorte que les mêmes zones du boisseau sont successivement en relation avec chacune des voies. Il en résulte que la qualité de l'étanchéité de chacune des voies par rapport aux autres est liée à celle de l'étanchéité des autres voies.

L'invention a pour but une vanne à trois voies dont la qualité de l'étanchéité d'une voie est indépendante de celle des autres voies.

L'invention a pour objet une vanne à trois voies comportant deux voies secondaires destinées à être fermées simultanément par rapport à une voie principale puis reliées alternativement à ladite voie principale, caractérisée en ce que la vanne comporte un organe de manoeuvre unique commandant sur chacune des voies un clapet et des moyens pour assurer d'une part la fermeture simultanée du clapet de chacune des voies secondaires et d'autre part l'ouverture alternative du clapet de l'une des voies et le verrouillage en position de fermeture de l'autre voie.

Selon une caractéristique, les axes des voies secondaires étant placés à l'opposé l'un de l'autre, les clapets de chacune des voies secondaires sont disposés mobiles autour d'axes de rotation parallèles entre eux et dans l'intervalle desquels est disposé parallèlement l'axe de rotation de l'organe de manoeuvre, lesdits axes étant perpendiculaires à l'axe commun des voies secondaires.

Selon une autre caractéristique, l'organe de manoeuvre comporte un plateau d'entraînement muni de deux doigts d'entraînement, chacun coopérant alternativement avec une glissière d'une came d'entraînement de l'un des clapets.

Selon d'autres caractéristiques, le plateau d'entraînement est muni d'une came de commande comportant pour chacun des clapets un secteur de verrouillage et un secteur de déverrouillage coopérant avec le profil associé de la came d'entraînement en fonction de la position où elle a été entraînée en rotation par le doigt d'entraînement. La came de commande comporte pour chacun des clapets un secteur de verrouillage circulaire et un secteur de déverrouillage tronqué, et la came de commande peut comporter un onglet circulaire.

La came de commande peut comporter une butée de sa position d'ouverture coopérant avec le doigt de commande de l'autre clapet.

Une telle vanne peut être du type quart de tour et commander une installation sous vide.

Les caractéristiques et avantages de l'invention ressortiront de la description d'un mode de réalisation donné à titre d'exemple et illustré dans les dessins.

La figure 1 est une vue de dessus de la vanne selon l'invention en position de fermeture.

La figure 2 est une vue de dessus de la vanne selon la figure 1 dans une position d'ouverture d'une voie secondaire.

La figure 3 est une vue en coupe suivant III-III de la vanne selon la figure 1.

La figure 4 est une vue en coupe suivant IV-IV de la vanne selon la figure 2.

Dans les figures on a désigné par 1 le corps paralléllépipédique d'une vanne comportant sur une face une voie principale 10, et sur deux autres faces opposées deux voies secondaires 12 et 13 dont les axes 14 et 15 sont disposés perpendiculairement dans un même plan avec l'axe 11 de la voie 10.

La voie 12 comporte un clapet circulaire d'obturation 2 muni d'un joint d'étanchéité 21 et mobile autour d'un axe 20 muni d'un joint d'étanchéité 22. La voie 13 comporte un clapet circulaire d'obturation 3 muni d'un joint d'étanchéité 31 et mobile autour d'un axe

- 3 -

30 muni d'un joint d'étanchéité 32.

Les axes 20 et 30 comportent chacun sur la face supérieure du corps 1 de la vanne une came d'entraînement 4 et 5 susceptible de coopérer avec un organe de manoeuvre 6 comportant à la partie inférieure d'un plateau de commande 7 une came de commande 8.

L'organe de manoeuvre 6 est mobile autour d'un axe de rotation 60 à l'aide d'un levier 61. L'axe de rotation 60, qui coïncide avec l'axe 11 de la voie 10, est disposé parallèlement et dans un même plan avec les axes 20 et 30. Le plateau d'entraînement 7 est muni sur la périphérie de sa partie inférieure de deux doigts d'entraînement 72 et 73.

La came de commande 8 comporte en regard de chacune des voies secondaires un secteur circulaire 80 et 81 d'un quart de cercle et un secteur tronqué 82 et 83 correspondant également à un quart de cercle.

Les cames d'entraînement 4 et 5 comportent chacune une glissière radiale 40 et 50 susceptible de coopérer respectivement avec les doigts d'entraînement 72 et 73. Le profil des cames 4 et 5 comporte identiquement de part et d'autre de l'axe des glissières 40 et 50, un onglet circulaire 41, 51 et 42, 52 dont le rayon de courbure est sensiblement égal mais avec un léger jeu à celui des secteurs circulaires 80 et 81, suivi d'une découpe en forme de butée 43, 53 et 44, 54.

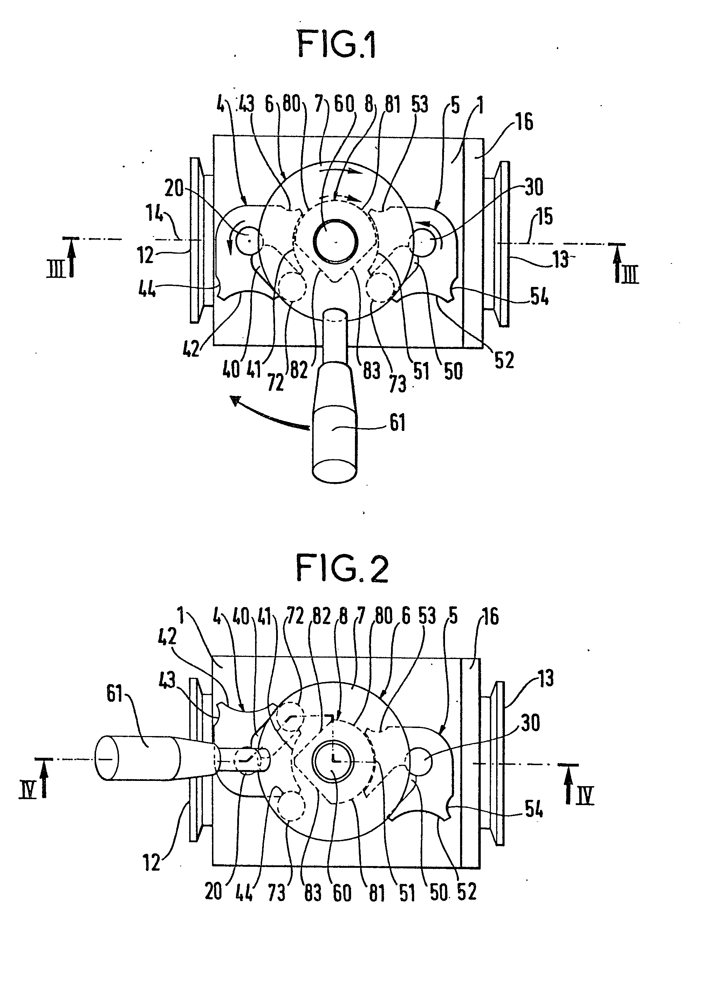

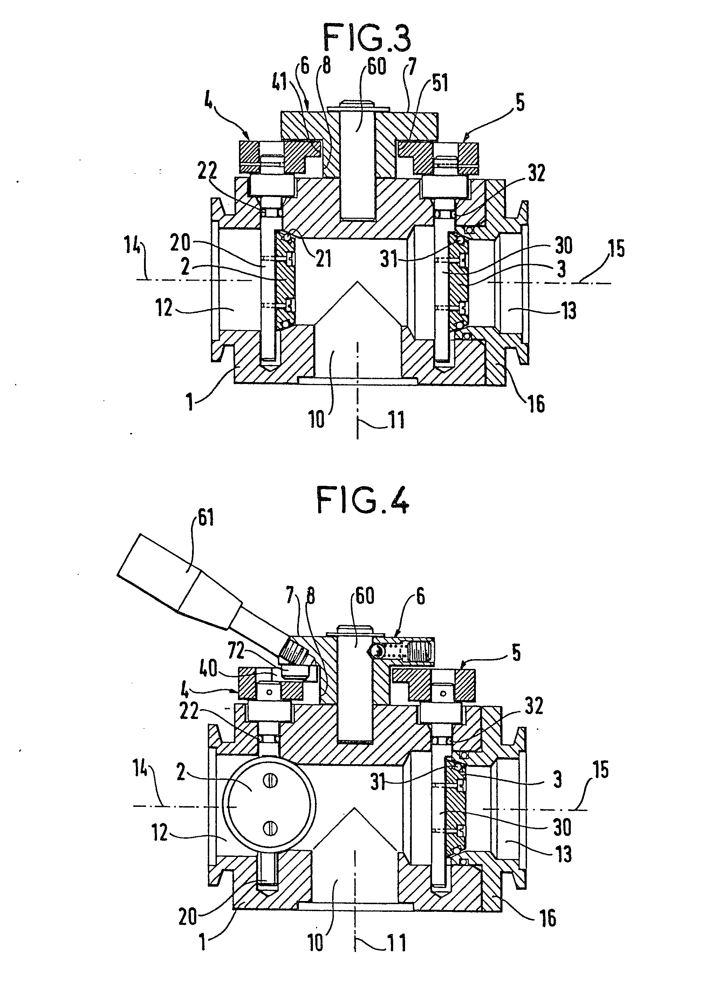

Le fonctionnement de la vanne est le suivant. Dans la position de fermeture simultanée des clapets 2 et 3 des voies secondaires 12 et 13, représentés dans les figures 1 et 3, les doigts d'entraînement 72 et 73 sont disposés à cheval au débouché des glissières 40 et 50 de telle sorte qu'ils entraveraient tout mouvement des clapets 2 et 3. L'angle formé entre l'axe de l'une des glissières 40 et 50 d'une part et entre l'inclinaison des doigts 72 et 73 d'autre part avec l'axe des voies secondaires est de 45 degrés.

Lorsqu'on manoeuvre le levier 61 d'un quart de tour dans le sens des aiguilles d'une montre le doigt d'entraînement 72 s'engage dans la lumière 40 de la came 4 pour la faire tourner d'un quart de tour dans le sens inverse des aiguilles d'une montre. Ce mouvement est rendu possible car le profil des cames 8 et 4 est tel qu'à tout moment de leur rotation la somme de leurs rayons disposés suivant l'entraxe des axes 60 et 20 reste inférieure à la distance de cet entraxe. Simultanément le doigt 73 s'écarte du débouché de la glissière 50. Mais le profil des cames 5 et 8 est tel que toute rotation de l'axe 30 du clapet 3 est interdit, car la somme des rayons disposés suivant l'entraxe des axes 60 et 30 tendrait à excéder la valeur de cet entraxe, ce qui assure le verrouillage en position de fermeture du clapet 3. Après une rotation d'un quart de tour des axes 60 et 20 on obtient une position de pleine ouverture du clapet 2 dans laquelle le doigt 73 est appliqué contre la butée 44 de la came 4. Les figures 3 et 4 montrent cette position.

Pour refermer le clapet 2 de la voie 12, il suffit de tourner d'un quart de tour en sens inverse pour ramener la vanne dans la position de fermeture simultanée des deux clapets. En poursuivant ce mouvement en sens inverse d'un quart de tour on obtiendrait alors l'ouverture du clapet 3 de la voie 13 avec verrouillage simultané en position de fermeture du clapet 2 de la voie 12.

On observera que pour des commodités d'accès à la face interne du clapet 3, on a prévu que le départ de la voie secondaire 13 sur le corps 1 de la vanne était réalisé à l'aide d'un fond amovible 16 fixé sur le corps par des vis non représentées.

Les avantages de l'invention sont les suivants :

- l'obturation ou l'ouverture de chaque voie est obtenue par un clapet propre à cette voie

- la fermeture ou l'ouverture de chaque direction est totale avant l'ouverture ou la fermeture de l'autre direction et réciproquement

- aucune surface de l'ensemble ne se présente devant l'une ou l'autre direction avant sa fermeture totale

- l'étanchéité d'une direction est assurée de façon propre et indépendante sans réagir sur l'autre direction.

Toutes ces qualités sont particulièrement intéressantes dans les problèmes des basses pressions et plus spécialement dans le dégazage des surfaces sous vide car :

- la commande de chaque voie par son propre clapet est importante par ce que chacune d'elle voit toujours sa même surface de fermeture

  - la fermeture totale d'une voie avant le début de l'ouverture de l'autre est importante car elle évite d'une part toute interférence de pression et d'autre part toute interférence de dégazage

  - l'absence d'autres surfaces annexes durant le mouvement de fermeture est importante car elle évite le dégazage de milieu à d'autres niveaux de pression.

  - la séparation des fonctions d'étanchéité est importante car elle permet une localisation et une intervention sans incidence d'une direction sur l'autre.

  Il est évident que l'invention n'est nullement limitée au mode de réalisation qui vient d'être décrit et représenté et qui n'a été donné qu'à titre d'exemple ; en particulier, on peut, sans sortir du cadre de l'invention, modifier certaines dispositions ou remplacer certains moyens par des moyens équivalents, ou encore remplacer certains éléments par d'autres susceptibles d'assurer la même fonction technique ou une fonction technique équivalente.

REVENDICATIONS

1/ Vanne à trois voies comportant deux voies secondaires destinées à être fermées simultanément par rapport à une voie principale, puis reliées alternativement à ladite voie principale, caractérisée en ce que la vanne comporte un organe de manoeuvre unique (6) commandant sur chacune des voies (12, 13) un clapet (2, 3) et des moyens (4, 5, 8) pour assurer d'une part la fermeture simultanée du clapet de chacune des voies secondaires et d'autre part l'ouverture alternative du clapet de l'une des voies et le verrouillage en position de fermeture du clapet de l'autre voie.

2/ Vanne selon la revendication 1, caractérisée en ce que les axes des voies secondaires (12, 13) étant placés à l'opposé l'un de l'autre, les clapets (2, 3) de chacune des voies secondaires sont disposés mobiles autour d'axes de rotation (20, 30) parallèles entre eux et dans l'intervalle desquels est disposé parallèlement l'axe de rotation (60) de l'organe de manoeuvre (6), lesdits axes étant perpendiculaires à l'axe commun des voies secondaires.

3/ Vanne selon la revendication 2, caractérisée en ce que l'organe de manoeuvre (6) comporte un plateau d'entraînement (7) muni de deux doigts d'entraînement (72, 73), chacun coopérant alternativement avec une glissière (40, 50) d'une came d'entraînement (4, 5) de l'un des clapets.

4/ Vanne selon la revendication 3, caractérisée en ce que le plateau d'entraînement (7) est muni d'une came de commande (8) comportant pour chacun des clapets un secteur de verrouillage (80, 81) et un secteur de déverrouillage (82, 83) coopérant avec le profil associé de la came d'entraînement (4, 5) en fonction de la position où elle a été entraînée en rotation par le doigt d'entraînement (72, 73).

5/ Vanne selon la revendication 4, caractérisée en ce que la came de commande (8) comporte pour chacun des clapets un secteur de verrouillage (80, 81) circulaire et un secteur de déverrouillage (82, 83) tronqué.

6/ Vanne selon la revendication 5, caractérisée en ce que le profil de la came d'entraînement (4, 5) comporte un onglet circulaire (41, 51).

7/ Vanne selon l'une des revendications 3 à 6, caractérisée en ce que la came d'entraînement (4, 5) d'un clapet comporte une butée (44, 54) de sa position d'ouverture coopérant avec le doigt de commande (73, 72) de l'autre clapet.

8/ Vanne selon l'une des revendications 3 à 6, caractérisée en ce qu'elle est du type quart de tour.

9/ Vanne selon l'une des revendications 1 à 7, caractérisée en ce qu'elle commande une installation sous vide.

# FIG.1

# FIG.2

FIG.3

FIG.4

Office européen
des brevets

**RAPPORT DE RECHERCHE EUROPEENNE**

Numéro de la demande

EP 81 10 0855

| | **DOCUMENTS CONSIDERES COMME PERTINENTS** | | | CLASSEMENT DE LA DEMANDE (Int. Cl. 3) |
|---|---|---|---|---|
| Catégorie | Citation du document avec indication. en cas de besoin. des parties pertinentes | Revendication concernée | | F 16 K 11/16 <br> F 16 K 35/14 |
| X | FR - A - 1 572 490 (A.M.R.I.) <br><br> * Page 2, ligne 9 à page 4, ligne 15; figures * <br> --- | 1-6 | | |
| X | FR - A - 1 536 322 (SOCIETE DES USINES RHONE-POULENC) <br><br> * Page 1, colonne de droite, dernier paragraphe à page 2, colonne de gauche, avant-dernier paragraphe; figures 1-4 * <br> --- | 1-6 | | |
| A | FR - A - 1 440 777 (JOUVENEL) <br><br> * Revendications, point 1; figures * | | | DOMAINES TECHNIQUES RECHERCHES (Int. Cl. 3) <br><br> F 16 K |
| | --------- | | | |

CATEGORIE DES DOCUMENTS CITES

X: particulièrement pertinent
A: arrière-plan technologique
O: divulgation non-écrite
P: document intercalaire
T: théorie ou principe à la base
de l'invention
E: demande faisant interférence
D. document cité dans
la demande
L document cité pour d'autres
raisons
&. membre de la même famille,
document correspondant

Le present rapport de recherche a été établi pour toutes les revendications

| Lieu de la recherche | Date d'achèvement de la recherche | Examinateur |
|---|---|---|
| La Haye | 05.05.1981 | VAN REETH |

OEB Form 1503.1 06.78